# EUROPEAN PATENT SPECIFICATION

(11) **EP 0 379 122 B1**
(45) Date of publication and mention of the grant of the patent: **17.07.1996**
(21) Application number: 90100767.4
(22) Date of filing: 15.01.1990
(51) Int. Cl.: C08F 2/44

(54) **A method for producing colored and exactly spherical fine-grains of polymer**
Verfahren zur Herstellung von gefärbten und genau sphärischen, feinkörnigen Polymeren
Procédé pour la préparation de perles très fines colorées et exactement sphériques de polymère

(30) Priority: 16.01.1989 JP 6232/89
(43) Date of publication of application: 25.07.1990
(73) Proprietor: DAINICHI SEIKA COLOR & CHEMICALS MANUFACTURING CO., LTD., Chuo-ku Tokyo (JP)
(72) Inventor: Ohkura, Ken, Ohta-ku Tokyo (JP); Shinagawa, Yukio, Shizuoka Prefecture (JP); Shibata,Tamiaki,Royal Château,Minami-Takabayashi, Shizuoka Prefecture (JP)
(74) Representative: Popp, Eugen, Dr.

(56) References cited:
- EP-A- 0 084 769
- FR-A- 2 098 467
- FR-A- 2 371 493
- FR-A- 2 503 168
- US-A- 3 054 762
- US-A- 4 169 912
- US-A- 4 500 658
- US-A- 4 699 662

## Description

The present invention relates to a method for producing colored and exactly spherical fine-grains of polymer, in which a pigment is homogeneously dispersed in the exactly spherical fine-grains of polymer and thus, the fading phenomenon is prevented.

The European patent application EP-A-0 084 769 discloses a method for producing polymer particles comprising the mixing of ethylenic unsaturated monomers with a filler of silicon dioxide basis. The filler is subject to treatment with a silane-coupling agent. Although of silicon dioxide basis, the filler may include further oxides, for example titanium dioxide. However, the SiO₂ is always present in an amount of more than 50 weight per cent, preferably more than 75 weight per cent. The obtained mixture is dispersed in an aqueous solution and subjected to heat polymerization in the presence of an initiator.

Other fine-grains of cross-linked resin, which are colored with water-soluble coloring, are also known (JP-A-288632/1987). However, these fine-grains of cross-linked resin are not satisfied with anti-solvent and weather-proof properties, although the fading phenomenon that the pigment drops out from the fine-grains of resin, is rare.

On the other hand, with said colored grains of resin, the fading phenomenon that the pigments are dropped out from the polymer grains, appears when they are mixed with a paint, although they are comparatively excellent in anti-solvent and weatherproof properties. Especially, with the colored and exactly spherical fine-grains of polymer using inorganic pigments, the fading phenomenon is remarkable, because the surfaces of the inorganic pigments show a hydrophilic property. Accordingly, when the untreated inorganic pigments are mixed with the ethylenic unsaturated monomers, and subsequently the suspension and heat polymerization is carried out in a water medium, the inorganic pigments are transfered into the water medium, and are partially fixed on the surfaces of the exactly spherical fine-grains of polymer. Then, the inorganic pigments fixed on the exactly spherical fine-grains of polymer drop off from the polymer grains. As a result, the fading phenomenon occurs, and the colored and exactly spherical fine-grains of polymer, containing small amounts of inorganic pigments therein, are obtained. Furthermore, in the case of a method comprising mixing a pigment with ethylenic unsaturated monomers, and carrying out emulsion polymerization thereof by the prior steps, the obtained grains become too fine. They can not be colored with the pigments by the reason of the reaction mechanism of the emulsion polymerization, and thus, they become not suitable as the material for a matt paint.

It is an object of the present invention to provide a method for producing colored and exactly spherical fine-grains of polymer wherein the disadvantages found in the prior are overcome.

It is another object of the present invention to provide such a method wherein pigments are homogeneously dispersed in said exactly spherical fine-grains of polymer.

It is furthermore another object of the present invention to provide such a method wherein a fading phenomenon is prevented.

According to the present invention, the above objects are accomplished by providing a method for producing colored and exactly spherical fine-grains of polymer as defined in claim 1.

The present invention is illustrated in detail as illustrated by the following embodiments.

The ethylenic unsaturated monomers are monomers having more than two α, β ethylenic unsaturated double bonds in one molecule, and are exemplarily designated as follows:
acrylates or the corresponding methacrylates, such as ethylene glycol diacrylate, diethylene glycol diacrylate, triethylene glycol diacrylate, polyethylene glycol diacrylate, polypropylene glycol diacrylate, butylene glycol diacrylate, neopentyl glycol diacrylate, 1,4-butane diol diacrylate, 1,6-hexane diol diacrylate, pentaerythritol triacrylate, and trimethylol propane triacrylate, ethylene oxide modified bisphenol A diacrylate, mixed acrylate methacrylate and aromatic divinyl compounds such as divinyl benzene.

The monomers having one α, β ethylenic unsaturated bond in one molecule can be used as required, which are copolymerized with said monomers, and they are designated as usual acrylic esters(ethyl, butyl, 2-ethyl hexyl), methacrylic esters(methyl, ethyl, butyl), unsaturated carbonic acids(acrylic acid, methacrylic acid, itaconic acid), and furthermore indicated as 2-hydroxy ethyl ester of acrylic acid or methacrylic acid, glycidyl or methaglycidyl ester, amids of acrylic acid or methacrylic acid, their N-methylol or N-alkoxy methyl derivatives, monomers, such as acrylonitrile or methacrylonitrile.

The protective colloidants used in the suspension polymerization is polyvinyl alcohol.

Moreover, surfactants are used together with said protective colloidants, and they are designated as nonionic surfactants, such as polyoxyethylene dodecyl ether, polyoxyethylene octyl phenyl ether, and anionic surfactants, such as alkyl sodium sulfate, alkylallyl sodium sulfate, fatty acid soda.

Radical polymerization initiators used in the suspension polymerization are designated as azobis-isobutylonitrile, azobis-valeronitrile, benzoilperoxide, t-butyl peroxide or redox type catalyzers.

Furthermore, the pigments are characterized by taking the treatment with silane-coupling agent, and the following pigments are exemplarily used: titanium dioxide, iron oxide pigments, lead chromate pigments, ultramarine blue, prussian blue, cadmium pigments, compound oxide pigments, zinc oxide, barium sulfate or calcium carbonate.

Said silane-coupling agents for treating the pigments are exemplified as vinyl trichlorosilane, vinyl trimethoxysilane, vinyl triethoxysilane, vinyl tris(2-methoxy ethoxy)silane, vinyl triacetoxysilane, γ-chloropropyl trimethoxysilane, γ-aminopropyl triethoxysilane, γ-(2-aminoethyl) aminopropyl triethoxysilane, γ -mercapto-propyl trimethoxysilane, γ-glycidoxypropyl trimethoxysilane, β-(3,4-epoxycyclohexyl)ethyl trimethoxysilane, γ -methacryl oxypropyl trimethoxysilane or 3-glycidoxypropyl methyl dimethoxysilane.

The treatment of the pigments with the silane-coupling agent is carried out by the steps of adding the pigments into methanol, stirring and mixing the same to make slurry, adding silane-coupling agent thereinto, removing the methanol by distillation, and heating the residual pigments at a temperature of 95-110°c for 3 to 10 minutes.

The amount of the silane-coupling agent to be added into the pigments is 0.3-12.0 parts by weight to 100 parts by weight of the pigments. Preferable amount is 1.0-7.0 parts by weight of silane-coupling agent.

The amount less than 0.3 parts by weight is not preferable because the pigments move to water medium during the polymerization with the monomer, when inorganic pigments are used as the pigments. Moreover, an amount more than 12.0 parts by weight is also not preferable because the new effects can not be expected, and the cost becomes higher as the silane-coupling agent is expensive.

The production of the colored and exactly spherical fine-grains of polymer by using said pigment treated with silane-coupling agent is carried out by the steps of adding, first of all, the pigments into ethylenic unsaturated monomers, homogeneously mixing the same by role mill or sand mill, and adding radical polymerization initiator into the mixture.

Furthermore, the protective colloidants, namely polyvinyl alcohol are dissolved into water, the mixture of said ethylenic unsaturated monomers, pigments and radical polymerization initiator is added into said solution, and the obtained mixture is stirred at a high speed for controlling the size of the suspended particles.

Then, the content of the suspension is transfered into a vessel having a usual wing stirrer, and is polymerized by heating at a temperature of 60°C -70°C. The polymerized suspension slurry is filtrated, washed, dryed and grinded to obtain the colored and exactly spherical fine-grains of polymer.

### EXAMPLE

The present invention is concretely illustrated by the following examples.

### Example 1(titanium oxide)

### (Preparation of titanium oxide pigment treated with silane-coupling agent)

100 parts by weight of titanium oxide (trade name:JR-701 titanium produced by Teikoku Kako Co.) and 200 parts by weight of methanol are put into a vessel having a stirrer, and stirred and mixed to make a homogeneous slurry. 3 parts by weight of γ-methacryl oxypropylmethoxysilane is subsequently added into said slurry, stirred and mixed at a temperature of 28°C for 20 minutes, after then, the methanol is removed by distillation, and the residual titanium oxide is heated at a temperature of 100°C for 5 minutes to obtain titanium oxide pigment treated with silane-coupling agent.

### (Preparation of colored and exactly spherical fine-grains of polymer)

24 parts by weight of said titanium oxide treated with silane-coupling agent is added into 40 parts by weight of ethylene oxide modified bisphenol A diacrylate, and homogeneously mixed by roll mill. To said mixture, a mixture obtained by dissolving 0.8 parts by weight of azobisisobutylonitrile into 40 parts by weight of 1,6 hexamethylene diacrylate,is mixed with stirring.

The obtained mixture is added into the solution prepared by dissolving 10 parts by weight of polyvinyl alcohol into 200 parts by weight of water, and stirred with a high speed stirrer to control the size of suspended particles. The content of the suspension is transfered into a vessel having a usual wing stirrer, and polymerized by elevating the temperature to 65°C-70°C.

The polymerized suspension slurry is filtrated, washed and dryed with hot air, and after then, grinded to obtain white colored and exactly spherical fine-grains of polymer.

The obtained particles are fine-grains having average particle size of 30µm. The particles of titanium oxide are homogeneously dispersed into the fine-grains of polymer according to the observation of an optical microscope, and the fading phenomenon of pigments is not observed.

### Comparative Example 1(titanium oxide)

The colored and exactly spherical fine-grains of polymer are prepared by the same process as shown in Example 1, using titanium oxide which is not treated with silane-coupling agent. But the particles of pigment are partially moved into water phase when the suspension is produced.

According to the observation of the obtained fine-grains of polymer by the optical microscope, the particles of pigment are merely fixed on the part of surfaces of the fine-grains of polymer, and fading phenomenon of the pigment is remarkable.

### Example 2 (red iron oxide)

### (Preparation of red iron oxide pigment treated with silane-coupling agent)

100 parts by weight of red iron oxide (trade name:Toda 130 ED red oxide N Toda Industrial Co.) are put into a mixer, and a mixture of 3 parts by weight of γ-glycidoxy propyltrimethoxysilane and 3 parts by weight of methanol, is added thereinto with stirring, and stirred and mixed at the normal temperature for seven minutes to obtain red iron oxide pigments treated with silane-coupling agent.

### (Preparation of colored and exactly spherical fine-grains of polymer)

12 parts by weight of said red iron oxide pigment treated with silane-conpling agent is added into 56 parts by weight of ethylene oxide modified bisphenol A diacrylate, and homogeneously mixed by sand mill. To said mixture, which is obtained by dissolving 0.8 parts by weight of azobisisobutylonitrile into 24 parts by weight of 1,6 hexamethylene diacrylate, is mixed with stirring.

The obtained mixture is added into the solution prepared by dissolving 10 parts by weight of polyvinyl alcohol into 200 parts by weight of water, and stirred with a high speed stirrer to control the size of suspended particles. The content of the suspension is transfered into a vessel having a usual wing stirrer, and polymerized by elevating the temperature to 65°C-70°C.

The polymerized suspension slurry is filtrated, washed and dryed with hot air, and then ground to obtain red colored and exactly spherical fine-grains of polymer.

The obtained particles are fine-grains having average particle size of 25µm. The particles of red iron oxide are homogeneously dispersed into the fine-grains of polymer according to the observation of an optical microscope, and the fading phenomenon of pigment is not observed.

### Example 3 (yellow iron oxide)

### (Preparation of yellow iron oxide pigment treated with sinlane-conpling agent)

100 parts by weight of yellow iron oxide (Trade name: MAPICOYELLOW LLXLO, TITAN Industrial Co.) are put into a mixer (Trade name:HENSHEL MIXER MITSUIMIIKE Manufacturing Co.), and a mixture of 3 parts by weight of γ-glycidoxy propyltrimethoxysilane and 3 parts by weight of methanol, is added thereinto with stirring, and stirred and mixed at the normal temperature for twenty minutes to obtain a yellow iron oxide pigment treated with silane-coupling agent.

### (Preparation of colored and exactly spherical fine-grains of polymer)

12 parts by weight of said yellow iron oxide pigment treated with silane-coupling agent is added into 40 parts by weight of ethylene oxide modified bisphenol A diacrylate, and homogeneously mixed by roll mill. To said mixture, a mixture, which is obtained by dissolving 0.8 parts by weight of azobisisobutylonitrile into 40 parts by weight of 1,6 hexamethylene diacrylate, is mixed with stirring.

The obtained mixture is added into the solution prepared by dissolving 10 parts by weight of polyvinylacohol into 200 parts by weight of water, and stirred with a high speed stirrer to control the size of suspended particles of the suspension . The content of the suspension is transfered into a vessel having a usual wing stirrer, and polymerized by elevating the temperature to 65°C-70°C.

The polymerized suspension slurry is filtrated, washed and dryed with hot air, and after then, grinded to obtain yellow colored and exactly spherical fine-grains of polymer.

The obtained particles are fine-grains having average particle size of 35µm. The particles of yellow iron oxide are homogeneously dispersed into the fine-grains of polymer according to the observation of an optical microscope, and the fading phenomenon of pigment is not observed.

### Comparative Examples 2 and 3(red iron oxide and yellow iron oxide)

The colored are exactly spherical fine-grains of polymer are prepared by the same process as shown in Examples 2 and 3, except using red iron oxide and yellow iron oxide which are not treated with silane-coupling agent.

But,the particles of pigment are partially moved into water phase as same as comperative example 1 when the suspension is produced.

According to the observation of the obtained fine-grains of polymer by the optical microscope, the particles of pigment are merely fixed on the part of surfaces of the fine-grains of polymer, and the fading phenomenon of the pigment is remarkable.

According to the colored and exactly spherical fine-grains of polymer of the present invention, the pigments are homogeneously dispersed into the fine-grains of polymer. Moreover, said colored and exactly spherical fine-grains of polymer are excellent in anti-solvent property, and thus, the pigments are not removable from the fine-grains of polymer, and fading phenomenon does not appear, even though they are blended into an organic solvent or paint vehicle.

Furthermore, the colored and exactly spherical fine-grains of polymer of the present invention are resin beads with excellent weatherproof and heat-resistant properties. They have a soft feeling, and are available as materials for various kinds of paints, not only for a cold and dry-setting paint, but also, for a heat-setting paint.

## Claims

1. A method for producing colored and exactly spherical fine grains of polymer comprising:
a) preparing a treated pigment by adding a pigment to methanol to form a slurry, adding a silane coupling agent in the amount of 0.3 to 12 parts by weight silane per 100 parts by weight pigment, subsequently removing the methanol by distillation, and heating the residual pigment at a temperature of 95 - 110°C for 3 to 10 minutes;
b) suspending ethylenic unsaturated monomers with the treated pigment of step (a) in water in the presence of polyvinyl alcohol;
c) heat polymerizing the suspension of step (b) at a temperature in the range of 60° to 70°C and recovering said fine grains of polymer.

2. The method according to claim 1, wherein said monomer is bisphenol A diacrylate modified with ethylene oxide.

3. The method according to claim 1, wherein said monomer is selected from the group consisting of acrylates, the corresponding methacrylates, a mixture of acrylates and methacrylates, and aromatic divinyl compounds.

4. The method according to claim 1, wherein said pigment is titanium oxide or iron oxide.

5. The method according to claim 1, wherein said pigment is selected from the group consisting of lead chromate, ultramarine blue, prussian blue, cadmium, multiple oxide groups, zinc oxide, barium sulfate and calcium carbonate.

6. The method according to claim 1, wherein said silane-coupling agent is γ-methacryl oxypropyltrimethoxysilane.

7. The method according to claim 1, wherein said silane-coupling agent is γ-glycidoxy propyltrimethoxysilane.

8. The method according to claim 1, wherein said silane-coupling agent is selected from the group consisting of vinyl trichlorosilane, vinyl trimethoxysilane, vinyl triethoxysilane, vinyl tris (2-methoxyethoxy) silane, vinyl triacetoxysilane, γ-chloropropyl trimethoxysilane, γ-aminopropyl tiethoxysilane, δ-(2-aminoethyl) aminopropyl triethoxysilane, γ-mercaptopropyl trimethoxysilane, β-(3, 4-epoxycyclohexyl) ethyl trimethoxysilane and 3-glycidoxypropyl methyl dimethoxysilane.

## Patentansprüche

1. Verfahren zum Herstellen von farbigen und exakt kugelförmigen Polymer-Feinkörnern, das die folgenden Schritte aufweist:
a) Herstellen eines behandelten Pigments durch Hinzufügen eines Pigments zu Methanol, um eine Aufschlämmung zu bilden, Hinzufügen eines Silan-Haftvermittlers in der Menge von 0,3 bis 12 Gewichtsteile Silan pro 100 Gewichtsteile Pigment, anschließendes Entfernen des Methanols durch Destillation und Erwärmen des verbleibenden Pigments bei einer Temperatur von 95 bis 110 °C für 3 bis 10 min;
b) Suspendieren von ethylenisch ungesättigten Monomeren mit dem behandelten Pigment von Schritt (a) in Wasser in Anwesenheit von Polyvinylalkohol;
c) Wärmepolymerisieren der Suspension von Schritt (b) bei einer Temperatur im Bereich von 60 bis 70 °C und Rückgewinnen der Polymer-Feinkörner.

2. Verfahren nach Anspruch 1, wobei das Monomer mit Ethylenoxid modifiziertes Bisphenol-A-Diacrylat ist.

3. Verfahren nach Anspruch 1, wobei das Monomer aus der Gruppe ausgewählt wird, die besteht aus Acrylaten, den entsprechenden Methacrylaten, einem Gemisch aus Acrylaten und Methacrylaten und aromatischen Divinylverbindungen.

4. Verfahren nach Anspruch 1, wobei das Pigment Titanoxid oder Eisenoxid ist.

5. Verfahren nach Anspruch 1, wobei das Pigment aus der Gruppe ausgewählt wird, die besteht aus Bleichromat, Ultramarinblau, Preußisch Blau, Cadmium, Vielfach-Oxidgruppen, Zinkoxid, Bariumsulfat und Calciumcarbonat.

6. Verfahren nach Anspruch 1, wobei der Silan-Haftvermittler γ-Methacryl-Oxypropyltrimethoxysilan ist.

7. Verfahren nach Anspruch 1, wobei der Silan-Haftvermittler γ-Glycidoxy-Propyltrimethoxysilan ist.

8. Verfahren nach Anspruch 1, wobei der Silan-Haftvermittler aus der Gruppe ausgewählt ist, die besteht aus Vinyltrichlorsilan, Vinyltrimethoxysilan, Vinyltriethoxysilan, Vinyl-tris(2-methoxyethoxy)silan, Vinyltriacetoxysilan, γ-Chlorpropyltrimethoxysilan, γ-Aminopropyltriethoxysilan, δ-(2-Aminoethyl)aminopropyltriethoxysilan, γ-Mercaptopropyltrimethoxysilan, β-(3,4-Epoxycyclohexyl)ethyltrimethoxysilan und 3-Glycidoxypropylmethyldimethoxysilan.

## Revendications

1. Procédé pour la production de fines perles de polymère colorées et exactement sphériques comprenant :
(a) la préparation d'un pigment traité par addition d'un pigment à du méthanol pour former une bouillie, addition d'un agent de couplage de type silane en une quantité de 0,3 à 12 parties en poids de silane pour 100 parties en poids de pigment, élimination ultérieure du méthanol par distillation et chauffage du pigment résiduel à une température comprise entre 95 et 110°C pendant 3 à 10 minutes ;
(b) la mise en suspension de monomères insaturés éthyléniques avec le pigment traité de l'étape (a) dans de l'eau en présence d'alcool polyvinylique ;
(c) la polymérisation à chaud de la suspension de l'étape (b) à une température comprise dans la gamme de 60°C à 70°C et la récupération de ces fines perles de polymère.

2. Procédé suivant la revendication 1, dans lequel ce monomère est du diacrylate de bisphénol A modifié avec de l'oxyde d'éthylène.

3. Procédé suivant la revendication 1, dans lequel ce monomère est choisi dans le groupe comprenant des acrylates, des méthacrylates correspondants, un mélange d'acrylates et de méthacrylates et des composés divinyles aromatiques.

4. Procédé suivant la revendication 1, dans lequel ce pigment est de l'oxyde de titane ou de l'oxyde de fer.

5. Procédé suivant la revendication 1, dans lequel ce pigment est choisi dans le groupe consistant en chromate de plomb, bleu outremer, bleu de prusse, cadmium, oxydes combinés, oxyde de zinc, sulfate de baryum et carbonate de calcium.

6. Procédé suivant la revendication 1, dans lequel cet agent de couplage de type silane est le γ-méthacryloxypropyltriméthoxysilane.

7. Procédé suivant la revendication 1, dans lequel cet agent de couplage de type silane est le γ-glycidoxypropyltriméthoxysilane.

8. Procédé suivant la revendication 1, dans lequel cet agent de couplage de type silane est choisi dans le groupe consistant en vinyl trichlorosilane, vinyl triméthoxysilane, vinyl triéthoxysilane, vinyl tris-(2-méthoxyéthoxy)silane, vinyl triacétoxysilane, γ-aminopropyl triéthoxysilane, δ-(2-aminoéthyl)aminopropyl triéthoxysilane, γ-mercaptopropyl triméthoxysilane, β-(3,4-époxycyclohexyl)éthyl triméthoxysilane et 3-glycidoxypropyl méthyl diméthoxysilane.
